(19) Europäisches Patentamt / European Patent Office / Office européen des brevets

(11) **EP 2 711 730 A1**

(12) **EUROPEAN PATENT APPLICATION**

(43) Date of publication:
**26.03.2014 Bulletin 2014/13**

(51) Int Cl.:
**G01S 7/48** *(2006.01)* **G01S 7/41** *(2006.01)*
**G01S 17/89** *(2006.01)* **G01S 17/06** *(2006.01)*
**G01S 17/02** *(2006.01)*

(21) Application number: **13250064.6**

(22) Date of filing: **12.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **20.09.2012 GB 201216818**

(71) Applicant: **BAE Systems PLC**
**London SW1Y 5AD (GB)**

(72) Inventor: **The designation of the inventor has not yet been filed**

(74) Representative: **BAE SYSTEMS plc**
**Group IP Department**
**P.O. Box 87**
**Warwick House**
**Farnborough Aerospace Centre**
**Farnborough**
**Hampshire GU14 6YU (GB)**

(54) **Monitoring of people and objects**

(57) A method and apparatus for monitoring the movement and activity of targets is provided. The method comprises the steps of initially detecting electromagnetic (EM) radiation reflected by the target and recording spectral information relating to it and detecting EM radiation reflected by a target at a later time and again recording spectral information relating to it. The spectral information relating to the initially detected and later detected targets is then compared, so as to establish whether the initially detected and later detected targets are the same.

Fig. 2

**Description**

This invention concerns the monitoring of movement and activity of people and objects over time. Such monitoring is carried out in order to provide information for use, in particular but not exclusively, for military and homeland security purposes.

If the activity and movement of both friendly and potentially hostile people and objects such as vehicles can be monitored over time then the greatest danger of any conflict situation, confusion, can potentially be avoided or at least reduced. In addition, if this information can be shared amongst groups of people or remote-controlled or autonomous devices working together, for example surveillance or military groups, then the movement of both friends and potential foes can be tracked. Such information gathering can be of particular use in close urban environments where both people and vehicles can frequently and quickly become either invisible or can merge with large groups and thus avoid detection. Hereinafter, wherever the term "target" is used this is intended to refer to both people and objects including vehicles.

One difficulty with monitoring such movements lies in the accurate identification of targets so that their movement or activity can be reliably monitored. Examples of situations where the accuracy of such monitoring can be critical are where the target is a potential target for weaponry or is a friend at risk of attack if falsely identified.

A second difficulty, relating in particular to potential or actual hostiles, lies in identifying the hostile without their knowledge.

According to one aspect of the invention there is provided a method of monitoring the movement and activity of targets comprising the steps of initially detecting electromagnetic (EM) radiation reflected by the target, recording spectral information about the initially detected EM radiation, detecting EM radiation reflected by a target at a later time, and comparing EM spectra of EM radiation of the initially detected and later detected targets whereby to establish whether the initially detected and later detected targets are the same.

Thus the invention provides a method of monitoring movements of targets, over time, which could be called "spectral tagging". For friends, this can help to ensure that targets previously identified as such can have their identity confirmed, even when they have "disappeared" in the interim, so that they are not falsely targeted. For foes, or potential foes, the method of the invention ensures that they can be tracked over time, despite their being out of surveillance for part of the time. Thus people under surveillance, by homeland security forces in an urban environment for example, can have their movements accurately monitored when they are only visible for short periods or when they become hard to track in crowds.

The method may include the step of making available the spectral information relating to the initially detected and later detected target for access by third parties by the provision of common access data storage means. The method of the invention therefore also provides the ability to share the spectral information. Hence where more than one person is tracking targets, an initial identification can be later used to confirm identity of a tracked target. This feature is foreseen as being particularly useful either in the battlefield for target tracking or in a homeland security scenario where a potential terrorist is being tracked by a survey team where members of that team are at different locations and identification of a target of interest is both difficult and vital.

To assist with accurate identification of targets under differing conditions of illumination, the method may include the step of actively illuminating the target with EM radiation, preferably laser radiation, more preferably infra-red (IR) and most preferably pulsed IR radiation. Active illumination of the target ensures consistent illumination in varying conditions such as day, night, shadow, etc., and aids interpretation of spectral information received from the target. Laser illumination gives the advantage of useful power over large distances, if required. The range will depend upon prevailing atmospheric conditions, the power of the laser and the type of target. However, for a handheld unit a range of up to one kilometre is envisaged. For heavier equipment, under the right conditions, a range of up to several kilometres is possible.

The use of IR radiation provides better penetration to the target in conditions of fog, smoke, dust and the like and helps avoid detection of the illumination by the target or associates thereof. The use of pulsed IR further decreases detectability of the illumination and also reduces power consumption, particularly with short pulse length, enabling lighter or less bulky equipment to be used.

It is recommended to use a broadband relatively short wave infra-red (SWIR) laser. Such a broadband SWIR laser may suitably be used with a range-gated spectral imager.

For military use, it may be suitable to use a weapon-mounted laser and imager. Apparatus according to the invention is capable of being both light and compact, thus making weapon mounting practical. Equally, apparatus according to the invention may conveniently be vehicle-mounted, especially for military use where mobile target information gathering is often key.

If pulsed laser illumination is used, the method can include the step of detecting a range to the target, as well.

The step of detecting EM radiation reflected by the target may include the use of a single point spectrometer, which may be bore-sighted to a suitable camera or optical sight. More preferably, however, a spectral imager, preferably with sufficiently short capture time to enable use with a pulsed laser, may be used to detect the reflected EM radiation.

The spectral imager is conveniently used to provide a visible image for the user.

According to a second aspect of the invention there is provided apparatus for monitoring the movement and activity of targets comprising means to illuminate the target with EM radiation, means to sense the said illuminating EM radiation reflected from the target, means to store spectral information of the sensed reflected EM radiation and means to compare spectral information of sensed EM radiation from at least two separate illuminations.

The invention will now be described by way of example with reference to the accompanying drawings of which:-

Figure 1 is a schematic view of equipment positioned for use according to the invention,

Figure 2 further illustrates the equipment used and a panel supporting the materials being tested;

Figures 3a and 3b show two further target panels;

Figures 4a and 4b two people's faces being imaged;

Figure 5a shows a target panel of coloured materials and Figure 5b shows the same panel with superimposed coloured rectangles;

Figure 6 is a graph of the average spectra of panels and rectangles of Figures 5a and 5b;

Figure 7 shows a series of identification maps;

Figures 8a, 8b and 8c show three Receiver Operator Characteristic curves;

Figure 9 is a graph of mean probability of identification plotted against active illumination power level;

Figures 10a, 10b and 10c show the calibration procedure for target panels and results;

Figures 11 a and b show the identification performances averaged over illumination levels for civilian fabrics, for SWIR and VNIR filter types, respectively;

Figures 12a and b show the identification performances averaged over illumination levels for car panels, for SWIR and VNIR filter types, respectively;

Figures 13a and b show the identification performances averaged over illumination levels for people, for SWIR and VNIR filter types, respectively;

Figures 14a and b show the identification performances averaged over illumination levels for camouflage fabrics, for SWIR and VNIR filter types, respectively;

Figures 15a and b show the identification performances averaged over civilian fabric targets, for SWIR and VNIR filter types and for a 0° viewing angle;

Figures 16a and b show the identification performances averaged over car targets, for SWIR and VNIR filter types and for a 0° viewing angle;

Figures 17a and b show the identification performances averaged over people targets, for SWIR and VNIR filter types and for a 0° viewing angle;

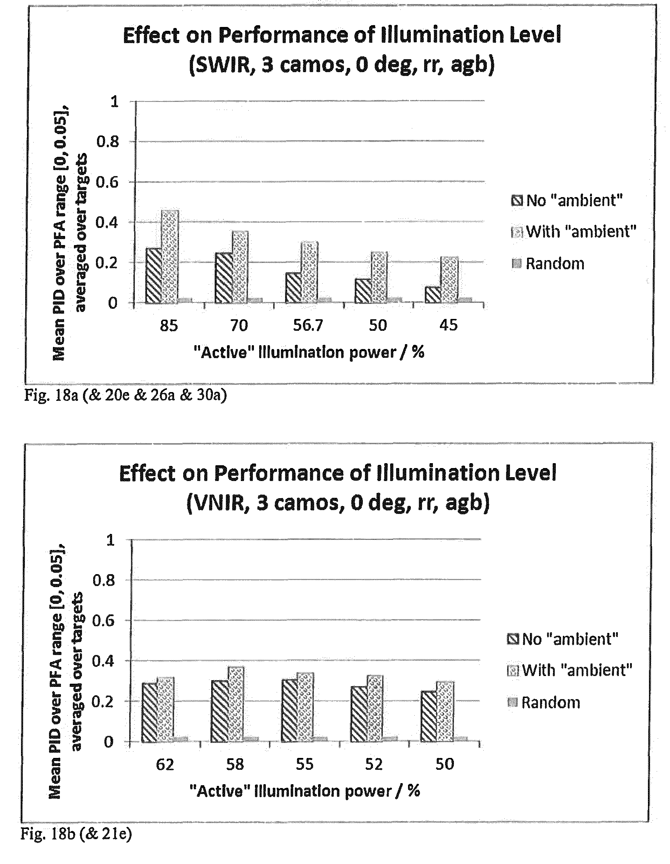

Figures 18a and b show the identification performances averaged over camouflage targets, for SWIR and VNIR filter types and for a 0° viewing angle;

Figures 19a and 19b show SWIR illumination spectra, reflected from Spectralon panels at the positions occupied by the four civilian fabrics for ambient and active illumination, respectively;

Figures 19c and 19d show VNIR illumination spectra, reflected from Spectralon panels at the positions occupied by the four civilian fabrics for ambient and active illumination, respectively;

Figures 20a to 20f show the identification performance (averaged over targets of a given type) for the different illumination conditions and view angles and for SWIR;

Figures 21a to 21c show the identification performance (averaged over targets of a given type) for the different illumination conditions and 0deg. view angle and for VNIR;

Figures 22a to 22c show the identification performance (averaged over targets of a given type) for the different illumination conditions and 45deg. view angle and for VNIR;

Figures 23a, 23b and 23c show identification performance of civilian fabrics without spectral binning (i.e. finest spectral resolution, with 2x binning (medium resolution, and with 4x binning (coarsest resolution, respectively;

Figures 24a, 24b and 24c show identification performance of car body panels without spectral binning (i.e. finest spectral resolution, with 2x binning (medium resolution, and with 4x binning (coarsest resolution, respectively;

Figures 25a, 25b and 25c show identification performance of people's faces without spectral binning (i.e. finest spectral resolution, with 2x binning (medium resolution, and with 4x binning (coarsest resolution, respectively;

Figures 26a, 26b and 26c show identification performance of camouflage fabrics without spectral binning (i.e. finest spectral resolution, with 2x binning (medium resolution, and with 4x binning (coarsest resolution, respectively;

Figures 27a, 27b and 27c show identification performance for civilian fabrics, with "standard" measured SWIR imagery, Performance after applying PCA, and keeping 10 highest-eigenvalue components, and Performance after x4 binning of original image, followed by PCA and keeping 10 highest-eigenvalue components, respectively;

Figures 28a, 28b and 28c show identification performance for car body panels, with "standard" measured SWIR imagery, Performance after applying PCA, and keeping 10 highest-eigenvalue components, and Performance after x4 binning of original image, followed by PCA and keeping 10 highest-eigenvalue components, respectively;

Figures 29a, 29b and 29c show identification performance for people's faces, with "standard" measured SWIR imagery, Performance after applying PCA, and keeping 10 highest-eigenvalue components, and Performance after x4 binning of original image, followed by PCA and keeping 10 highest-eigenvalue components, respectively;

Figures 30a, 30b and 30c show identification performance for camouflage fabrics, with "standard" measured SWIR imagery, Performance after applying PCA, and keeping 10 highest-eigenvalue components, and Performance after x4 binning of original image, followed by PCA and keeping 10 highest-eigenvalue components, respectively;

Figures 31 a and 31 b show identification performance for two car body panels of slightly different shades of red, for SWIR and VNIR, respectively;

Figures 32a and 32b show identification performance for facial skin of two different people of similar skin colour, for SWIR and VNIR, respectively;

Figures 33a and 33b show identification performance for tropical jungle pattern camouflage from two different jackets, for SWIR and VNIR, respectively;

Figure 34a shows a four camouflage fabric target panel, SWIR false-colour RGB image, illuminated only by the "active" spotlight at 85% power;

Figure 34b is as Figure 34a but overlaid with ground truth regions;

Figure 34c is as Figure 34b but showing ground truth regions on the same jungle camouflage jacket;

Figures 35a and 35b show identification performance for two areas of the same camouflage jacket, for SWIR and VNIR, respectively;

Figures 36a and 36b show spectral reflectances of red car panels, averaged over ground truth spatial regions of interest, for SWIR and VNIR, respectively;

Figures 37a and 37b show spectral reflectances of facial skin from two people, averaged over ground truth spatial regions of interest, for SWIR and VNIR, respectively, and

Figures 38a and 38b show spectral reflectances of tropical jungle-pattern camouflage fabric from two jackets, averaged over ground truth spatial regions of interest, for SWIR and VNIR, respectively.

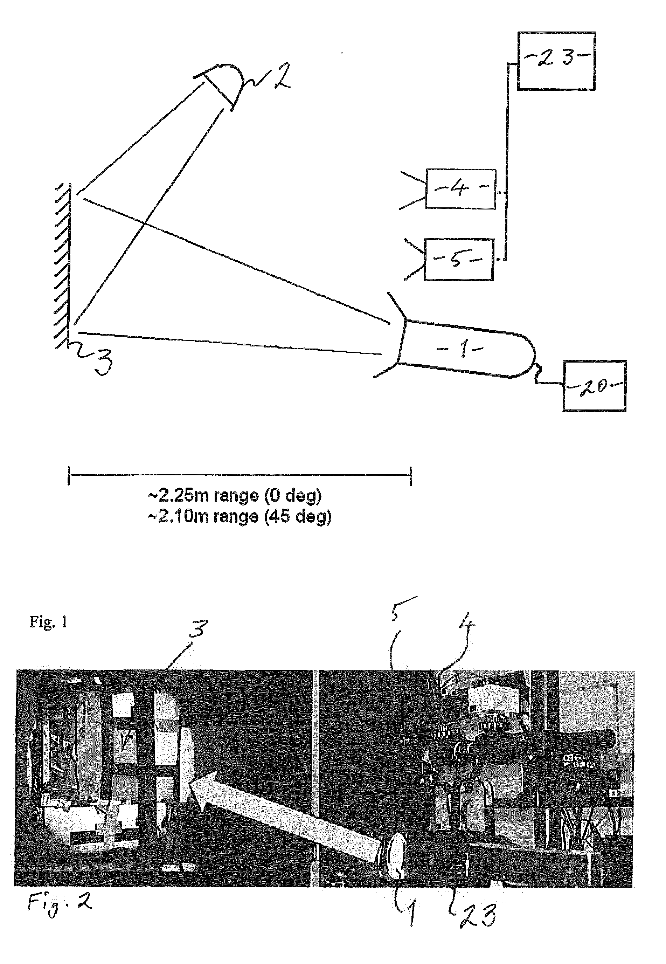

Referring to Figures 1 and 2, a series of experiments was carried out and a simplified mock-up was used, capturing the key elements of real spectral tagging scenarios. A Source 4 theatre spotlight 1 was used as the "active" illumination light source as attempting to use a pulsed broadband laser integrated with gated imagers would add cost and risk.

Other simplifications included using floodlights 2 with daylight-like spectra to approximate "ambient" outdoor illumination. This allows better control over this aspect of the experiment. A variety of target materials (fabrics, car body panels, human subjects, and calibration panels) formed as a panel 3 could then be placed in front of lights and hyperspectral imagers 4, 5, so that short wave infra-red (SWIR) and visible, near infra-red (VNIR) spectral images, respectively, could be taken under a variety of controlled lighting conditions. A computer 23 was linked to the imagers 4, 5, to process the images.

A number of conditions were varied. These are listed below:-

Active illumination power; ambient illumination (on or off, simulates night and day conditions); Viewing angle: ~0° (head-on) and ~45° (oblique); Target type (civilian and camouflage fabrics, car body panels, human heads); Spectral region (SWIR and VNIR); Spectral resolution (SWIR only; varied by combining bands in the images after capture).

Active illumination power levels were chosen so that the lowest setting gave approximately the same signal as the ambient illumination (to test the effect of mixing equal intensities of ambient and active spectra). Usually, different power levels were needed for the two spectral regions (SWIR and VNIR) and also for the two aspect angles. Table 3-1 below summarises these.

| Spectral region | Veiwing angle | "Ambient" | "Active power levels | Approximate ratios of active to ambient intensities |
| --- | --- | --- | --- | --- |
| *SWIR* | 0° | 4x "daylight spectrum" lamps[7] | 25, 33, 100% [7] | 1, 2, 4[7] |
| | | 3x "daylight spectrum" lamps[8] | 45, 50, 56.7, 70, 85%[8] | 1, 1.3, 2, 3, 4[8] |
| | 45° | 1x "daylight spectrum" lamp | 25, 33, 100%[7] 52.5, 60, 70, 100%[8] | 1, 2, 5[7] 1, 1.5, 2, 2.5[8] |
| *VNIR* | 0° | 1x 500W halogen floodlight | 30, 35, 45%[7] 50, 52, 55, 58, 62%[8] | 1, 2, 4[7] 0.8, 1.1, 1.75, 2.25, 3.5[8] |
| | 45° | 1x 500W halogen floodlight | 35, 45, 56.7%[7] 55, 60, 62, 65, 72%[8] | 1, 2, 4[7] 0.8, 1.25, 1.75, 2.25, 3.5[8] |

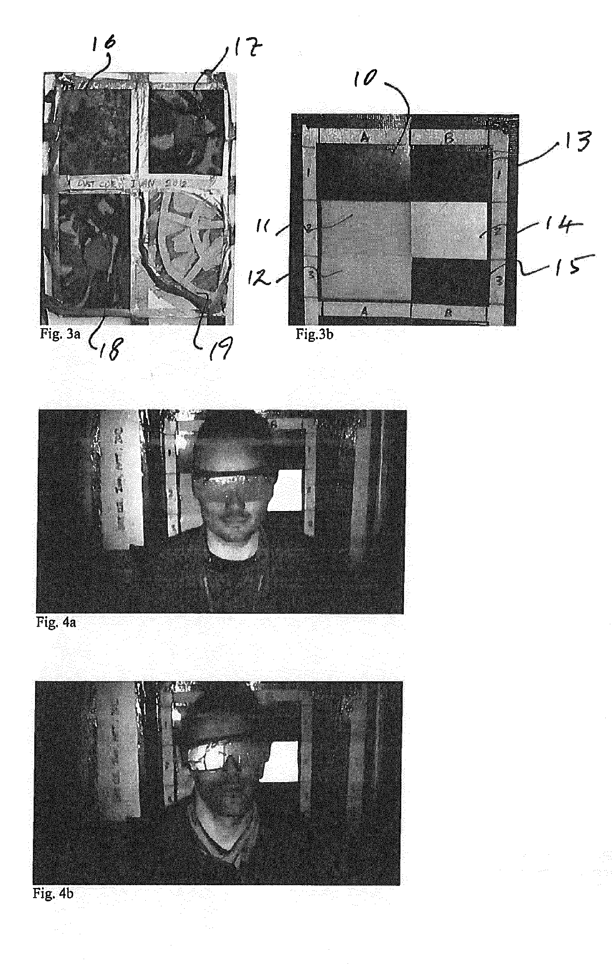

As well as a target panel with four civilian fabrics dyed red 6, blue 7, yellow 8 and tan 9, seen in Figure 2, two other target panels, shown in Figures 3a and 3b, were used. One, shown in Figure 3b, consisted of six small pieces of car body, painted dark green 10, two slightly different shades of red 11 and 12, black 13, light grey 14, and dark blue 15. The other, shown in Figure 3a, contained four pieces of camouflage fabric arranged in quadrants, similar to the civilian fabric panel. There were three types of camouflage, all out of service: a German army camouflage jacket 16; two British army "tropical jungle" pattern camouflage jackets 17, 18; and a British army desert pattern helmet cover 19. In addition, two people's faces were imaged, in portrait and profile (portrait only shown in Figures 4a and 4b). Both images were captured by the VNIR hyperspectral imager, and displayed in RGB format. Lighting provided by the Source 4 spotlight only, at 45% power.

In order to adjust the power level of the spotlight 1, it was plugged into a dimmer unit 20.

The VNIR hyperspectral imager 5 consisted of a PCO1600 CCD imager (made by PCO) with a Silicon focal plane array (FPA not shown separately) with a spectrograph attached to its aperture (also not shown). Light was allowed in through a horizontal slit, such that each frame captured consisted of a horizontal line seen through the slit split into its component wavelengths, so that the spectral dimension is spread across the FPA's vertical dimension. A motor scanned the slit from top to bottom, and the imager sequentially captured spectral images of each spatial slit, building up a hypercube (spectral image) line by line. It was set up to capture hypercubes with 100 bands ~5.6nm wide (8x pixel binning) in the VNIR spectral range 400nm - 1400nm, and 650 x 359 pixels.

The SWIR spectral imager 4 was similar in design and operation to the VNIR one 5. It employed a SU640-1.7RT imager made by Sensors Unlimited, containing an InGaAs FPA (not shown). It was set up to capture hypercubes with 196 bands ~3.0nm wide (no pixel binning) in the SWIR spectral range 1400nm - 3000nm, and 476 x 200 pixels.

All results in this section use a sub-set of the measured bands. Bands at the edges of the VNIR imager's spectral ranges were removed, to avoid any edge effects. Also, bands in spectral regions of atmospheric absorption (as simulated by MODTRAN®5) were removed. All remaining bands were then used in calculations done with a spectral angle mapper (SAM) algorithm. For SWIR imagery, this left 53 bands out of the original 196; and for VNIR imagery, 59 out of 100.

Additionally, the effect on performance of combining bands in the SWIR images was studied, by analysing spectral images resulting from summing the signal from adjacent pairs of bands ("2x binning", 26 bands), and 4x binning (13 bands), i.e. one half and one quarter of the full spectral resolution. In the binned images, one of the original bands (centred on 1519nm), next to an atmospheric absorption region, was ignored to ensure the binned bands were of equal spectral width. While binning bands loses some spectral information, it improves signal to noise ratio (SNR), so performance may be maintained or even improved. If performance is adequate at coarser spectral resolution, this may allow lighter and/or cheaper spectral sensors to be used.

Once spectral imagery was gathered for the various conditions, ground truth maps of each different target material were created for each set of conditions. The maps were used for two purposes. Firstly, the spectra of pixels within the map of a given target material were averaged to generate the spectral "fingerprints" (filters) which were needed to search for those materials in that image and other images.

Secondly, target/background maps were generated. This allowed quantitative identification and false alarm rates to be calculated from the output of the algorithm searching for the spectral filters.

Effort was saved by re-using the same maps for different images in a given set. The trade-off was that the map area for each target was smaller than if separate maps had been tailored to each individual image, since there was usually some motion between image captures. This effect was small for the fabric and car body panels, as they were hung from the wall and not moved between captures in a given set. However, there was much more motion between images with the human subjects, which reduced the number of pixels which could reliably be used to extract averaged spectra of the subject's skin. This means that both the averaged spectral filters and the performance statistics are based on fewer samples than otherwise.

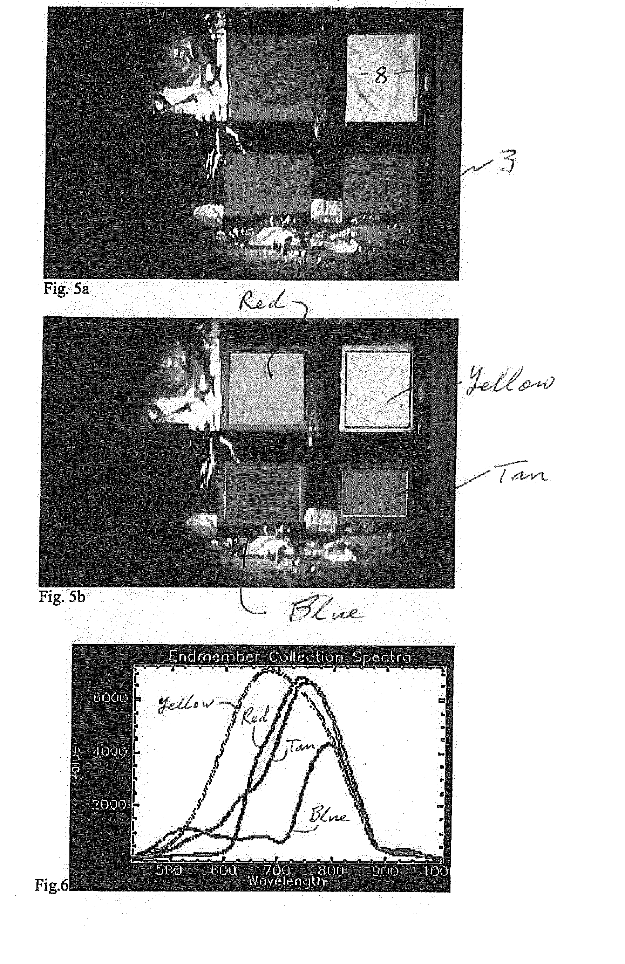

Figure 5 and Figure 6 show examples of ground truthing. In Figure 5a, a panel 3 made up of target materials coloured red 6, blue 7, yellow 8, and tan 9 is used (as also shown in Figure 2); there is no ambient and 100% active illumination, on 0deg. view angle. Figure 5b shows the same panel 3 with the "ground truth" target map overlaid (one target colour, representing target identification number, per fabric). Figure 6 is a graph showing the radiance spectrum of each of these four materials 6, 7, 8, and 9 in the visible and near infrared (VNIR) spectral range. The graph colours, which correspond to the overlayed rectangular areas in fig 5b, have been chosen to approximately match the actual fabric colours, in order to avoid confusion. Thus, the yellow graph in Fig. 6 is the average spectrum of the portion of the yellow fabric covered by the yellow rectangle in fig. 5b; the brown curve corresponds to the tan fabric (bottom right in 5a and 5b), etc., etc. In the case of faces, average filter spectra were found by averaging over two separate regions of each face: part of the forehead, and part of the face below the nose (including lips and surrounding skin).

In order to search for the target filters, the SAM algorithm was used. This algorithm is simple and does not require an estimate of the multivariate background statistics (covariance matrix) of a spectral image. Performance of such algorithms is compromised if there are insufficient pixels to generate a reasonably precise estimate of the covariance. SAM works by treating the sequence of spectral band intensities of each spatial pixel in the image as if it were a vector, with each band intensity being one of the vector elements. It takes the dot product between each pixel in the image, and the average spectral filter of the material currently being searched for. The result is the cosine of the angle between these two "vectors" in an abstract multidimensional "band space" (one dimension per spectral band). Hence, if the two spectra have the same spectral shape (intensities in different bands vary in the same proportions), the "vectors" will point in the same direction, the angle will be zero, and its cosine, one. Conversely, the more different the spectra, the larger will be the angle and the smaller the cosine. SAM has the added benefit that it is not dependent on the total intensities (vector lengths) of the test and filter spectra, and so in theory it should remain unaffected by shadowing. In practice this is not the case, because shadowed pixels have a lower SNR than bright pixels, which alters their spectral shape, i.e. the vector direction. SAM is expressed mathematically in Equation 1.

## Equation 1 $\qquad M_{SAM} = \cos\theta = S_{test} \cdot S_{filt}$

By applying Equation 1 to each pixel in a spectral image, we build a map of SAM metric ($M_{SAM}$) values, one per pixel. This can then be thresholded to generate a binary identification map of target/not target. By comparing with the ground truth map, we can then calculate the probability of identification (PID), which is the ratio of correctly identified target pixels to the total number of target pixels and the corresponding probability of false alarm (PFA) which is the ratio of incorrectly identified non-target pixels to the total number of non-target pixels for a given threshold value of $M_{SAM}$, above which pixels are classified as "target".

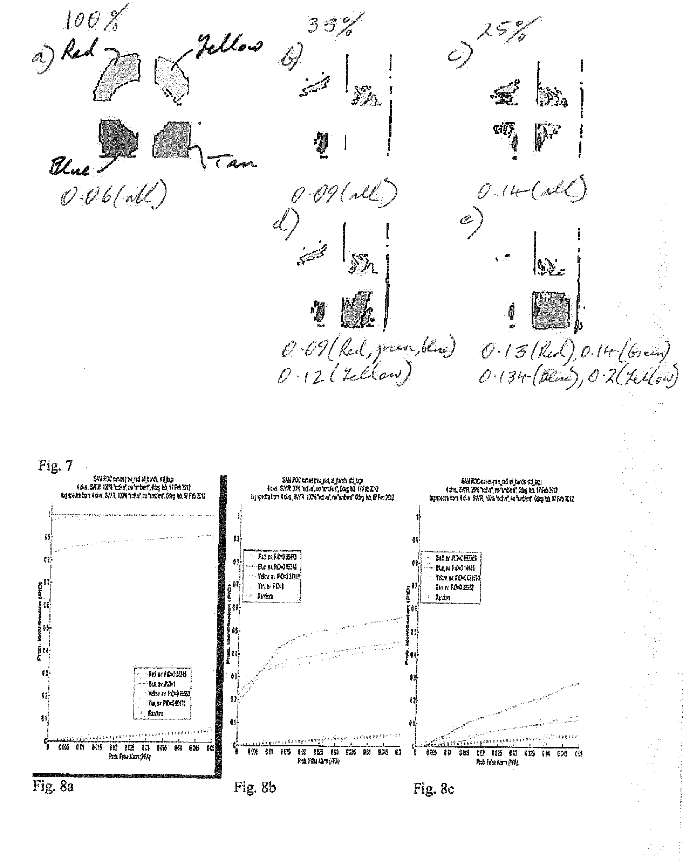

Figure 7 shows an example of some identification maps generated in this way. The maps are calculated from the SWIR spectral images of the four civilian fabrics (top, including ground truth), for different "active" illumination power levels (percentages above each column of maps), no ambient illumination. Coloured areas are pixels whose SAM metric value exceeds the threshold value (numbers written beneath each identification map) for the corresponding target. The top row of maps each uses a single threshold value for all four targets. The bottom row each uses thresholds chosen independently for each target. We see that brighter active illumination gives better results (which we would expect, as such images will have a greater SNR). Identification performance can be improved considerably by independently choosing thresholds for each target, at the cost of greater complexity. In a commercial spectral tagging system, it would be simplest to have a single control for adjusting a single threshold level.

In Figure 7 we also see texture in the identification maps, which seems to correspond to the creases and shadows in the fabrics. Identification appears to be more difficult in shadowed areas, as we would expect. If the active illuminator and cameras were closer together, or the targets further away, we would expect less shadow to be visible to the imagers, which presumably would boost identification performance.

As mentioned, pairs of PID and PFA values can be calculated for a given target, for a given threshold value of *MSAM.* If we vary the threshold, we generate a sequence of such PID and PFA pairs. These can be plotted against each other on a graph (commonly called a Receiver Operator Characteristic, or ROC, curve). See Figure 8 for examples. Figure 8 shows ROC curves showing identification performance when applying SAM to the four civilian fabrics in SWIR imagery, for the three "active" power levels without ambient illumination and at 0deg. viewing angle. PFA scale (x-axes) runs from 0.0 to 0.05 (0-5% of non-target pixels mis-classified as target). The "random" curve shows the expected performance of classifying pixels as "target" by simply picking them at random.

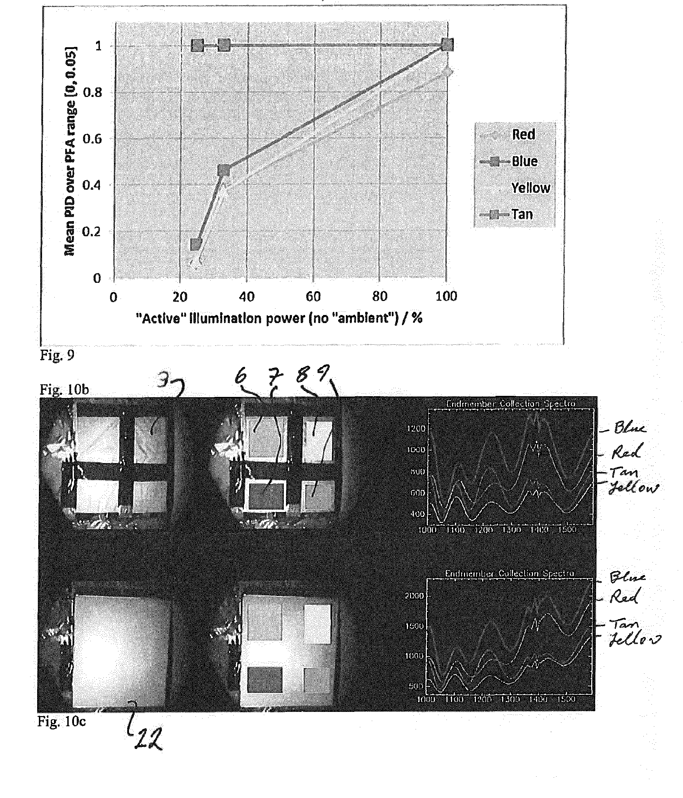

While this provides much detailed information, it can make it difficult to "see the wood for the trees" when searching for trends in even moderately-sized data sets, such as was generated by these experiments. To make this task easier, each target ROC curve can be represented by the average PID over the PFA range. While showing less detail than its underlying ROC curve, this average PID has the advantage of being representative of a range of PFA values likely to be of interest in different situations; and it smoothes out the dramatic fluctuations in PID value which can occur at a single PFA for relatively trivial changes in conditions that are beyond experimental control. We can then plot average PID values against values of a controlled variable, such as active power level, as in Figure 9 below. Figure 9 shows mean PIDs over PFA range [0.0 0.05] for each civilian fabric, plotted against "active" power level (SWIR imagery, no "ambient", 0 view). This graph condenses the information shown in the ROC curves of Figure 8. The high PID rate for the tan fabric at lower power levels compared to the others is due to the distinctiveness of its SWIR spectral properties; whereas the spectra of the other fabrics are more similar to each other and so more difficult to distinguish - see spectral intensity graphs for the four fabrics in Figure 5. In this case we see a general trend of improved performance with brighter illumination, as we would expect.

Average PIDs are plotted on bar graphs instead of line graphs. This is intended to make comparison and trend-finding easier. Also, it is noted that in the results shown in subsequent sections, mean PID values are often themselves averaged in different ways (e.g. over targets, or over illumination levels), to assist in the search for general trends by smoothing out spurious variations between targets etc.

Finally, when calculating PID and PFA values, non-target background is ignored. In other words, any pixels which do not lie within a target's ground truth map are treated neither as target nor background, and do not contribute to the PID or PFA results. When searching for a particular target e.g. red civilian fabrics 6, other targets of the same type in the image (in this example, blue 7, yellow 8 and tan 9 fabrics) are treated as "background" (non-target) for the purposes of calculating PID and PFA values. This means that the experimental analysis is focused on distinguishing tagged target materials from each other, rather than from whatever other background happens to be behind them.

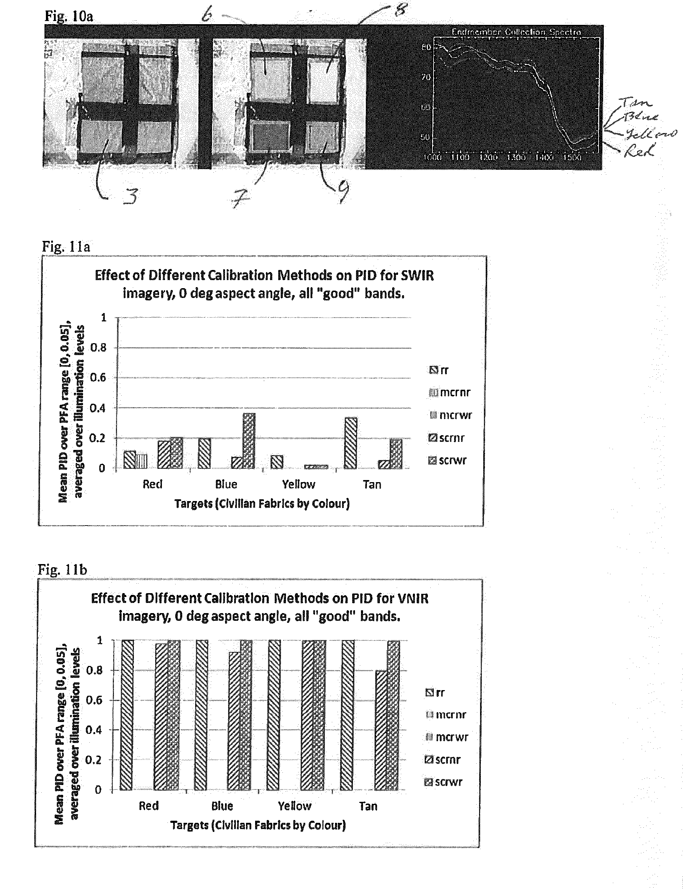

In the sample results shown in earlier sections, generation of spectral target filters was done by simply averaging the raw reflected radiance values of the pixels in a given target's ground truth map. In the present analysis, target filters were always extracted from imagery under maximum active illumination, without ambient, and for a 0° look angle. However, it is also possible to separate the effects of the materials' spectral reflectances from the spectra of the light sources illuminating them. If we know the illumination spectral radiance over each target, we can divide the target radiance images by the illumination spectra to recover the targets' reflectance spectra. In practice, this was done by measuring reflected radiance from a Spectralon panel 22 (essentially a panel of pure white material, reflecting very nearly 100% of light at all wavelengths studied here) for each captured image of targets, under the same conditions. This calibration procedure and its results are illustrated by Figures 10a, 10b and 10c. Figure 10a shows SWIR target spectral images and raw reflected spectral radiances. Figure 10b shows images and radiances as in the top row but with the Spectralon panel 22 in front of the target fabrics. The spectral radiances are now the average illumination spectra over each target, reflected from the same regions on the Spectralon panel 22. Figure 10c shows the result of dividing spectral pixel intensities of Figure 10a by those of Figure 10b. The resulting "calibrated image" gives us the spectral reflectances of the four civilian fabrics, by averaging over ground truth pixels for each target.

However, there are a number of ways of performing this calibration procedure for each image. One way is to measure the average illumination spectrum for each target for the conditions 0° view, maximum active power, no ambient image; and then divide each target pixel's spectrum in all other images (for different illuminations and view angles) by the appropriate target value. Then SAM is applied to these calibrated images, using the calibrated target spectra from the source image (100% active power, no ambient, 0° view) as the filters. In a practical spectral tagging system, this is roughly equivalent to measuring the overall active illumination spectrum at source, and using this to calibrate all raw radiance measurements. In theory, this would correct for any spectral differences between different lasers in different active spectral tagging devices. This could make identification performance more robust when one soldier is searching for targets tagged by another. In principle, this method of calibration could be built into each device, though it would add complexity compared to simply using the raw measured spectrum (which would rely on all soldiers using laser illuminators with the same or similar spectra).

Alternatively we could try to correct for the varying illumination levels by calibrating each image by its own Spectralon-measured target illumination spectra. In a real scenario, this is equivalent to also correcting for the effects of range (including beam spreading, and atmospheric attenuation). This adds further complexity, and in a practical system would probably require additional sensors or data feeds (to keep track of atmospheric conditions) as well as added on-board processing to perform the correction. Alternatively, it would require a material of known reflectance at the same range as the target to be measured soon before or afterwards, which may be difficult to arrange reliably.

Finally, rather than using spatially-averaged illumination spectra as discussed above, each target pixel could be calibrated with the exact illumination spectrum incident on it. This is what is done in Figure 10, by dividing each pixel in the raw target image 6, 7, 8 and 9 by the corresponding pixel in the raw Spectralon image, 22. In a commercial device, this would require a measurement of the laser spectrum at different points in the beam cross-section, which would then need to be registered with the measured image. As with the averaged calibration method, this could be done with or without correction for range effects.

The different calibration methods are summarised below in Table 2. In all cases, the final spectral tag would be averaged over the measured target pixels, after completing any appropriate calibration steps.

Table 2: Summary of different methods for acquiring spectral tags.

| Spectral filter (tag) type | Calibrated? | Calibration spectra averaged over target pixels? | Calibration spectra corrected for "active" spectral power (=> range in real device)? | Complexity (4 = most complex, 1 = least complex) |
|---|---|---|---|---|
| Raw Radiance (rr) | No | N/A | N/A | 1 |
| Mean CalibRation No Range correction (mcrnr) | Yes | Yes | No | 2 |
| Mean CalibRation With Range correction (mcrwr) | Yes | Yes | Yes | 3 |
| Spatial CalibRation No Range correction (scrnr) | Yes | No | No | 3 |
| Spatial CalibRation With Range correction (scrwr) | Yes | No | Yes | 4 |

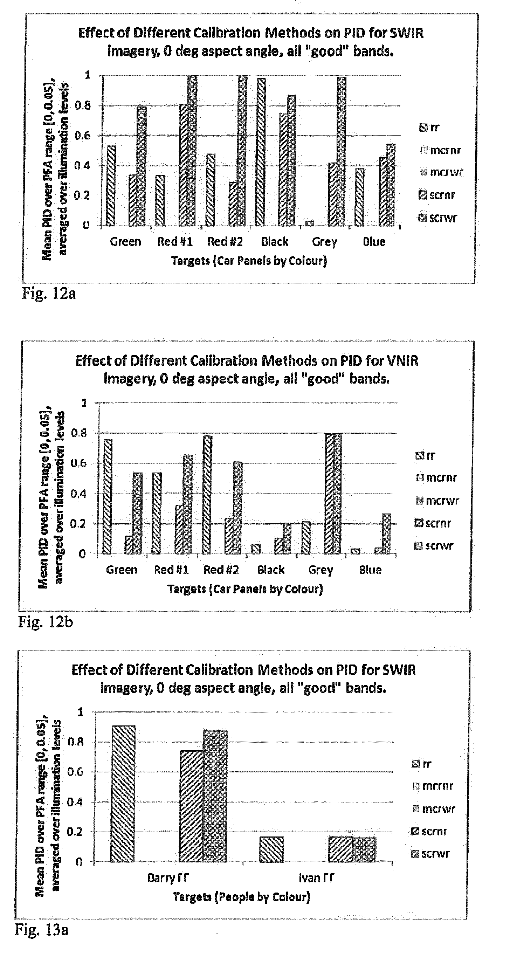

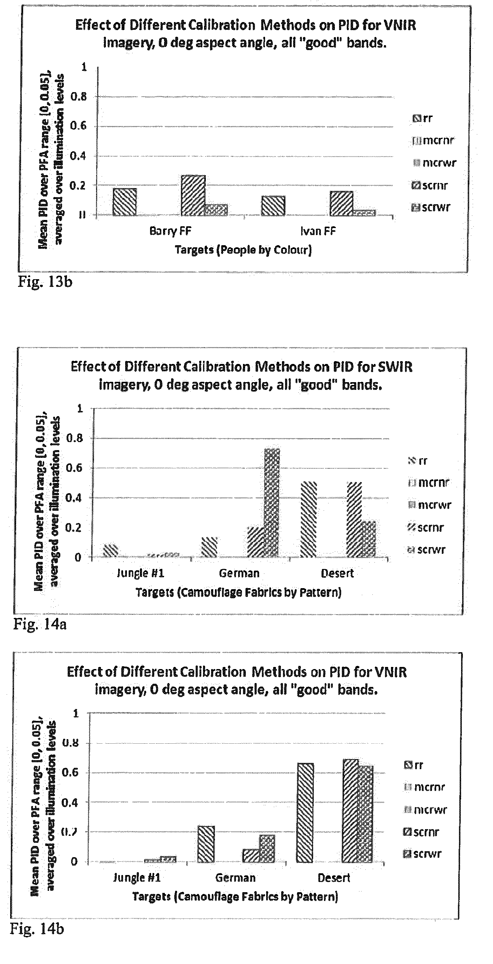

In Figures 11 to 14, we see the identification performances (averaged over illumination levels) for the different spectral filter types explained above.

Using a "raw radiance" (rr) filter usually gives reasonable results and often excellent results. This is encouraging, as it is also the simplest type of filter. For nearly all targets, none of the filter types involving mean calibration perform well. Finally, spatial calibration filters tend to outperform the rr filters, with the scrwr filter type (with range correction) tending to do slightly better than the scrnr filter. This is what we would expect, as the more complex calibration methods should be closest to the ideal of measuring and comparing the materials' intrinsic spectral reflectance.

So, overall, scrwr filters perform most consistently over all target types, for both SWIR and VNIR imagery. This is followed by scrnr and then rr.

All subsequent results are for rr spectral filters only. As the rr filter would require the least added complexity in a practical spectral tagging device, this approach has been focused on first. This enables us to see if the performance is sufficiently good that the added complexities of calibration are not needed.

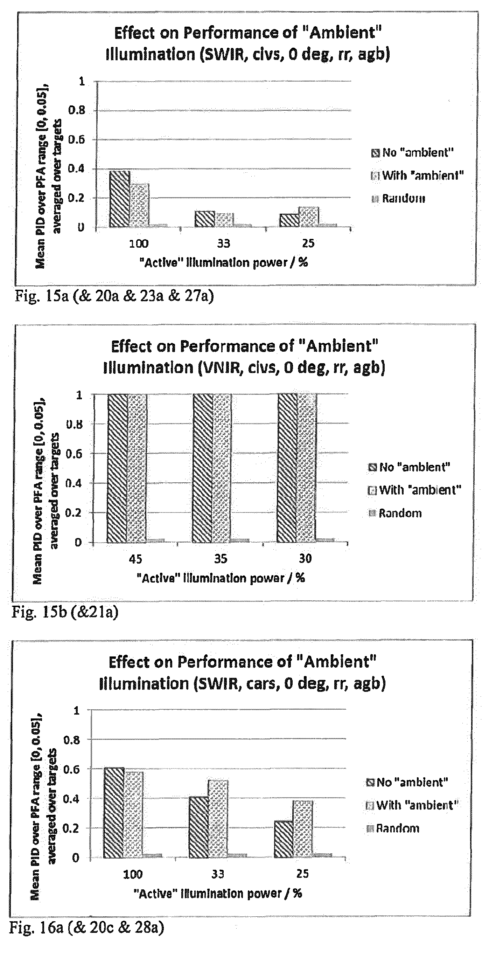

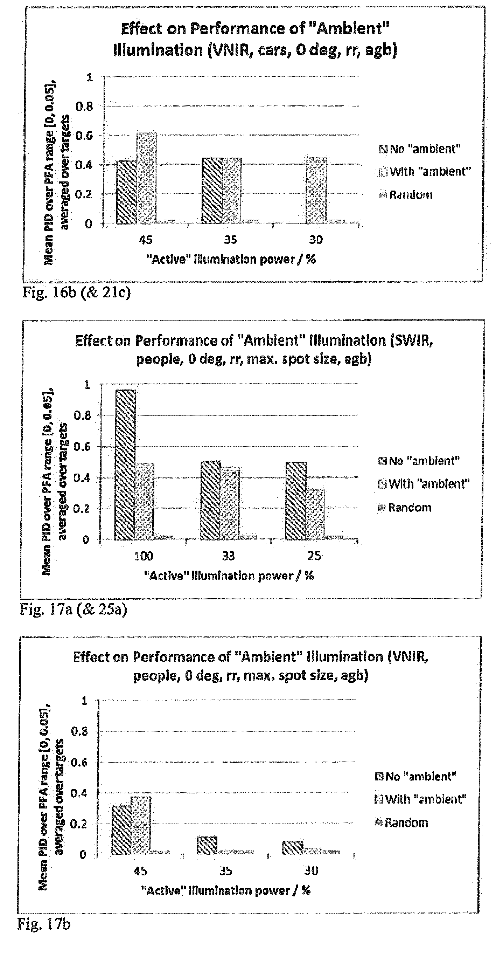

In Figures 15 to 17, we see the identification performance (averaged over targets of a given type) for the different illumination conditions, for a 0° viewing angle. Note that "random" indicates the performance of classifying pixels as "target" by picking them at random. Thus we would expect good performance to be well above this noise floor.

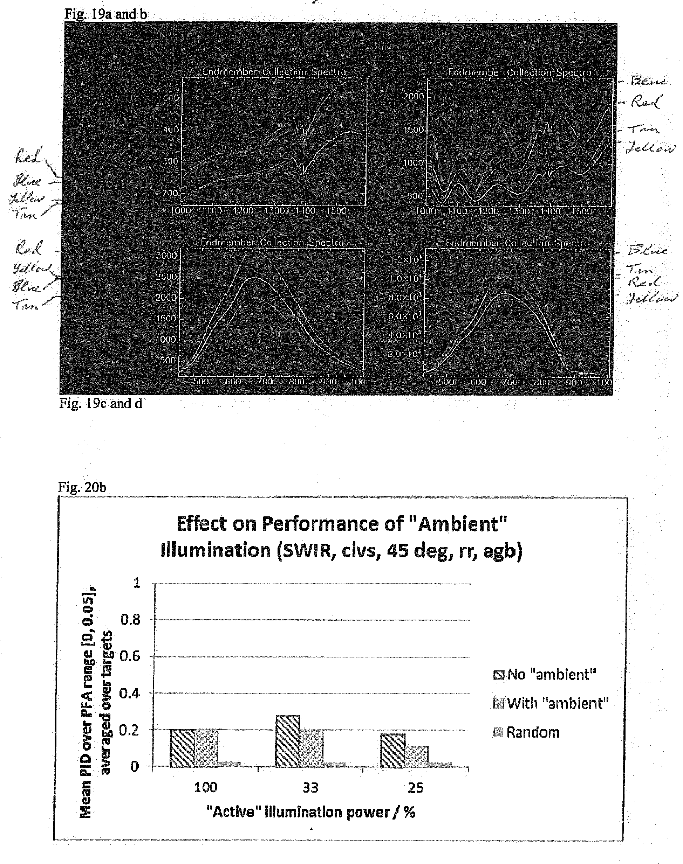

On the whole, we see the trend we would expect, namely that performance is better when the target materials are better-lit. However, somewhat unexpectedly, we also often see an improvement in performance when ambient illumination is mixed with active, as compared with the active-only results. Note that the filters were measured without ambient illumination, so we would expect that mixing the two illumination spectra would undermine performance. Figure 19 shows illumination spectra, reflected from Spectralon panels at the positions occupied by the four civilian fabrics. In the SWIR spectra, the dip and spike at around 1400nm is due to atmospheric absorption, which in this part of the spectrum is noticeable even over a distance of ~2m. Although the VNIR active and ambient illumination spectra are very similar in shape (essentially black body spectra), their SWIR counterparts are very different from each other. Yet even in the SWIR, we often see the same effect. This performance reversal happens more often at lower active powers and rarely at the highest active power level. This may mean that, at these lower illumination levels, performance is limited by noise. Thus any additional signal may improve matters, even if generated by illumination with the "wrong" spectrum.

We also see a difference between SWIR and VNIR related to target type. VNIR identification rates are much better than for SWIR for the civilian fabrics at all illuminations (and to a lesser extent for the camouflage fabrics). Meanwhile, identification rates for car bodies and particularly human faces tend to be better in the SWIR. This may be due to differences in the materials' reflectance properties between these two spectral regions.

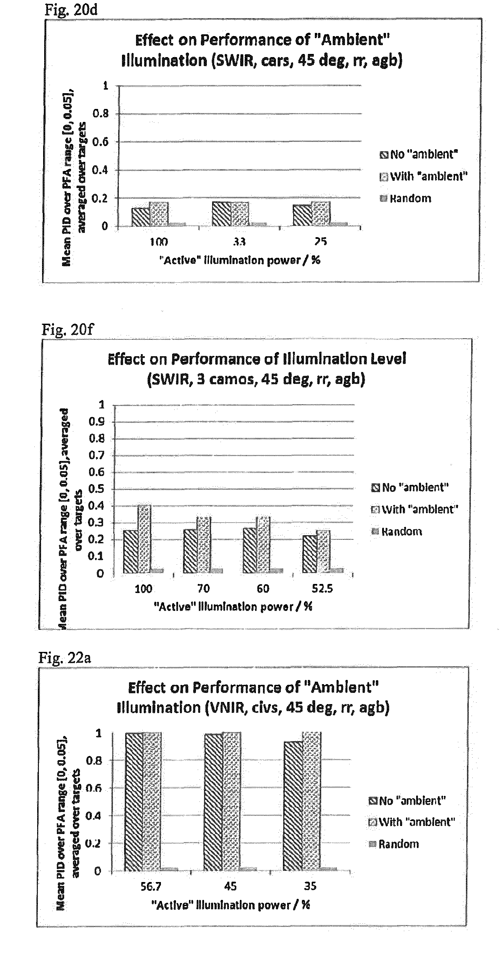

In Figure 20 and Figure 21, we see the identification performance (averaged over targets of a given type) for the different illumination conditions and view angles.

Again, we see the trend that we would expect (deterioration in performance with changing view angle). This is because most materials are not perfectly Lambertian (i.e. diffuse, or matte; reflected brightness independent of view angle), but have surface reflectances with some directional dependence (often manifested as mirror-like shininess). As the car body panels are shinier (more directional) than fabrics, we would expect the deterioration to be more marked for these materials, and this was observed here.

However, despite this, performances in all conditions for all materials (for both SWIR and VNIR) are maintained well above the random noise floor, for all illumination levels studied. This suggests that spectral tagging performance will probably remain robust over the different view angles bound to be encountered in the field.

The effect of spectral resolution of the SWIR imagery on identification performance was also investigated. Different spectral resolutions of a given measurement case were obtained by post-processing the measured spectral images - the intensities of neighbouring bands were summed, or "binned". Only the 53 approximately-3nm-wide bands were used which were outside spectral regions of high atmospheric absorption. While potentially losing some spectral information, the wider bands should also have increased SNR. Alongside the original 3nm resolution images, two coarser resolutions were obtained by summing adjacent band pairs ("x2 binning", giving 26 bands approximately 6nm wide), and adjacent groups of four bands ("x4 binning", giving 13 bands approximately 12nm wide).

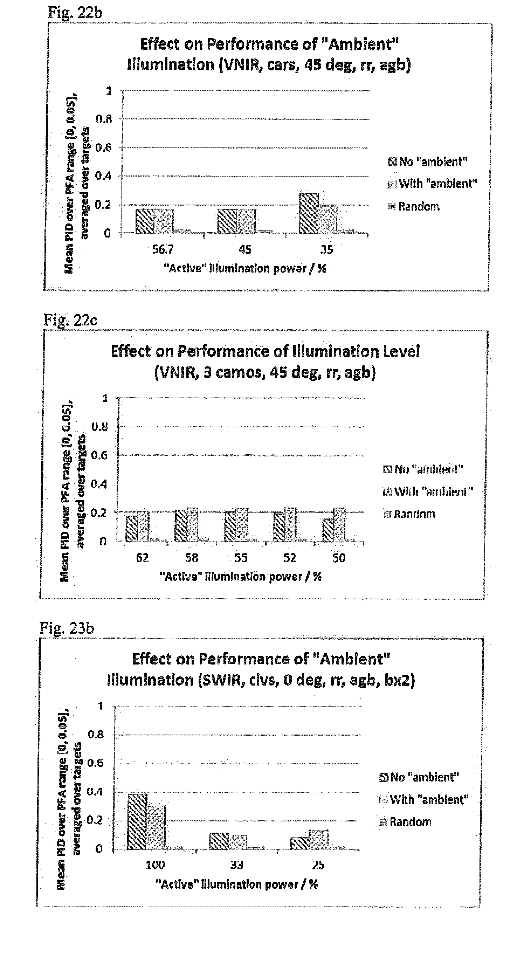

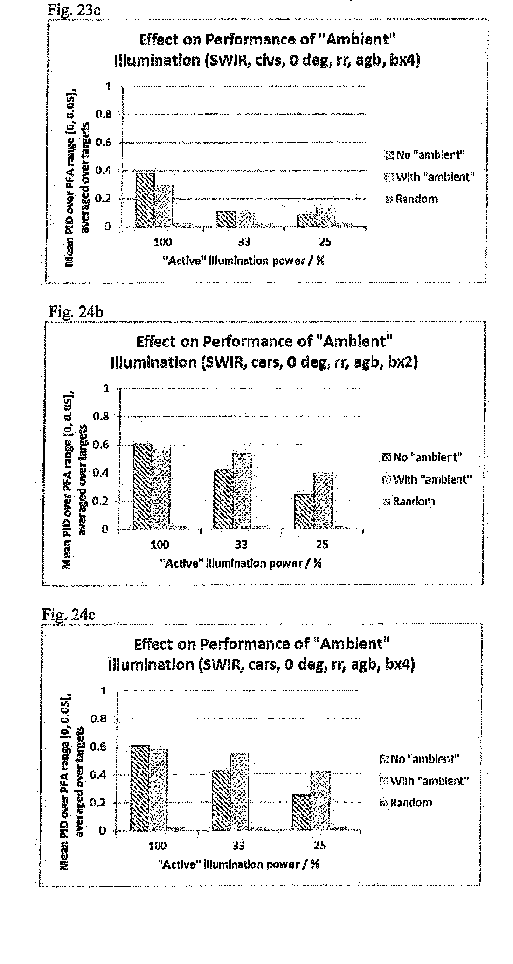

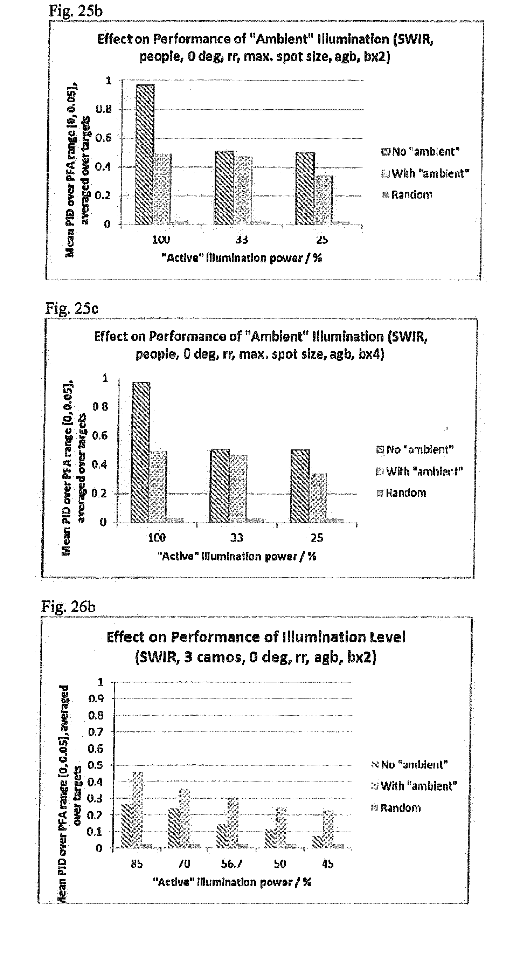

The results for the different target types (head-on view only) are presented in Figures 23 to 26. We see that identification performance changes very little as the spectral resolution is coarsened. This suggests that, provided identification performance is considered to be good enough in the first place, a coarser spectral resolution can be used without any significant effect on performance. The coarsest resolution studied (consisting of 13 bands) is not much finer than that achievable by a Bayer-type spectral imager. This suggests that such a sensor, with associated size, weight and power (SWAP) benefits, would be appropriate for use with an active spectral tagging device.

A feature of spectral imagery, especially with hyperspectral imagery where tens to 100s of contiguous spectral bands are used, is that there is a considerable amount of redundancy in the spectral information content. In other words, the bands are not completely independent of each other; they duplicate information. Frequently, spectral analysis performance can be nearly as good using just a few bands (albeit carefully chosen) as when using all available bands. This is often due to low SNR in some bands. We attempt to avoid this by not using bands in atmospheric absorption regions.

Thus, in principle, we can use fewer spectral bands and eliminate redundant spectral information about the targets of interest, whilst preserving most of the unique information. In practice, this is not straightforward, in part because it is target dependent. A good choice of bands for one target may be a poor choice for another. Thus the simplest approach, giving the most consistently good performance is to simply use all bands with reasonable SNR, as in results presented so far. However, there are dimensional reduction techniques, which can distil the unique spectral content into fewer spectral bands. An example method is Principal Component Analysis (PCA). PCA works, like SAM, by treating each pixel in an N-band spectral image as if it were an N-dimensional vector. The steps of the PCA algorithm are summarised below.

1. Calculate covariance matrix of image.

2. Find eigenvectors and corresponding eigenvalues of covariance matrix.

3. Transform image into eigenvector space.

Thus PCA replaces the original N band intensities at each pixel with a new set of N intensities, each of which is a linear combination of the original band intensities - the PCA components. These components correspond to the covariance eigenvectors. Thus, whereas in general the original bands will have been correlated with each other, i.e., when one changes in intensity, others tend to change with it, the new eigenvector bands or PCA components are, by definition, statistically independent of each other. However, some of these components will mainly contain random noise rather than useful signal. Therefore, if we can identify which these are, we can eliminate them from the transformed image, so that we are left with only the most useful PCA components. There are different ways of doing this. The simplest approach is to keep only the components with the greatest eigenvalues, i.e., the greatest intensities.

PCA is applied to the measured 53-band SWIR spectral images, as well as corresponding x4 binned images. For each image, the 10 PCA components with the greatest eigenvalues were kept and the rest discarded. For all the measured images, the non-noise PCA components appeared to be amongst these 10, albeit the remainder of the 10 appeared to consist mainly of noise (between three and five components across all targets illuminated with the brightest active illumination level). After the PCA transformation and selection of the 10 highest-eigenvalue components, these 10-component spectral images were analysed as before, with spectral tags extracted for each target, SAM applied, etc.

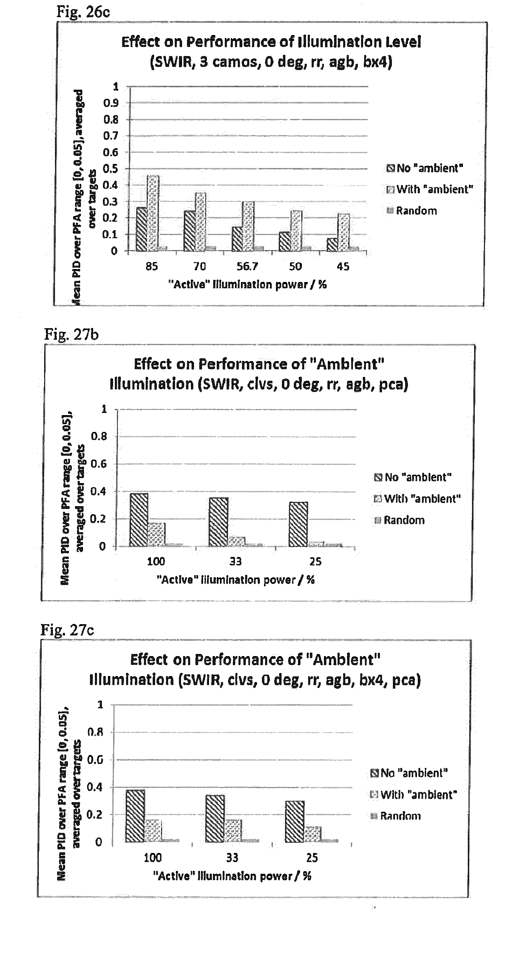

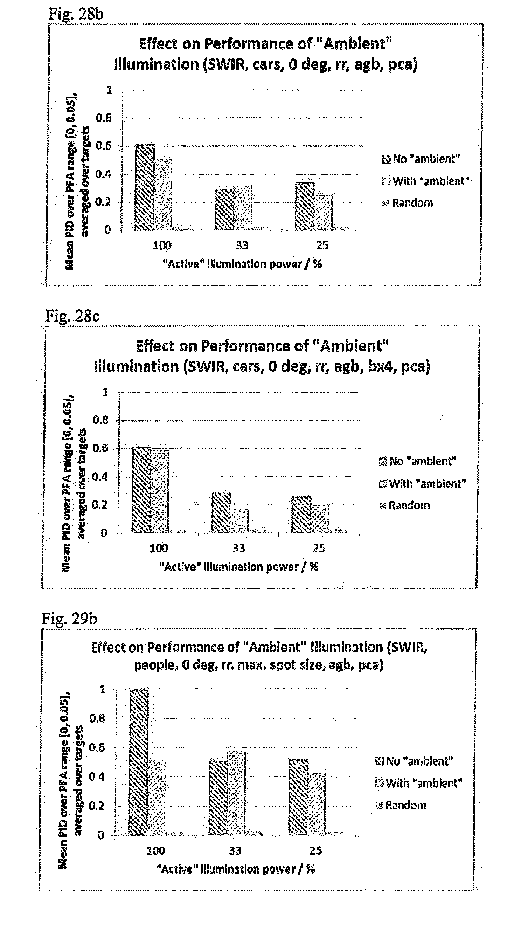

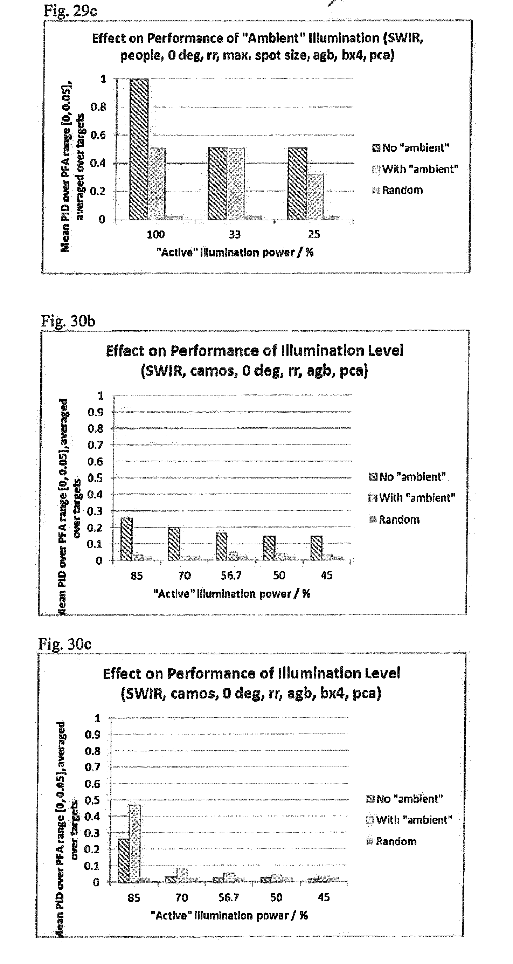

Identification performance results for the various target types are shown in Figures 27 to 30. Only a single, simple dimensional reduction method has been tried. However, results are encouraging. Across all the target types, for active-only illumination, identification performance using PCA is at least maintained (compared with using the unmodified imagery) and, for dimmer illumination levels, is often substantially improved. However, PCA tends to degrade performance for mixed active and ambient illumination cases, especially for the fabric targets. Applying PCA to x4 spectrally binned imagery usually has little effect on performance. The main exception is the set of results for camouflage fabrics, shown in Figure 30.

It is noted that dimensionality reduction would have the added benefit of reducing the quantity of data needing to be shared over communication links by commercial spectral tagging systems, at the cost of some added data processing, depending on the algorithm used.

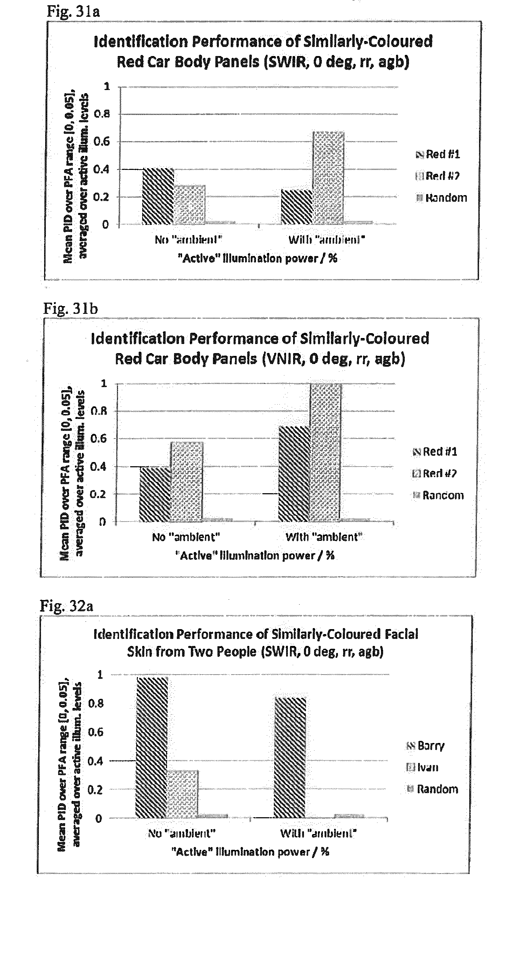

There were three pairs of target materials in the sample studied which share similar colours to the unaided human eye. These were: two car body panels coloured in slightly different shades of red; two people with similar skin colour, and two tropical jungle-pattern camouflage jackets. Identification performances for these target pairs are displayed in Figures 31 to 33.

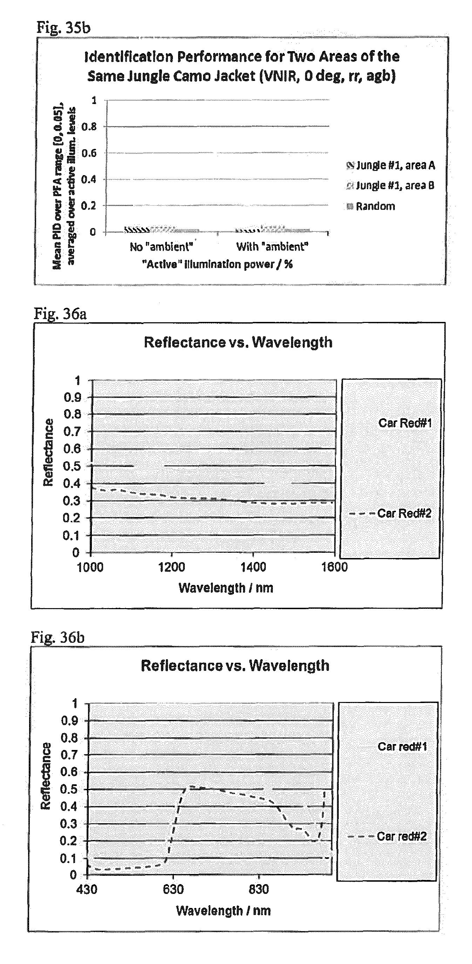

We see that identification performance is good for the car body panels in both the SWIR and the VNIR, though better in the VNIR. They share some spectral similarities in both wavelength ranges but there are also differences, see Figure 36.

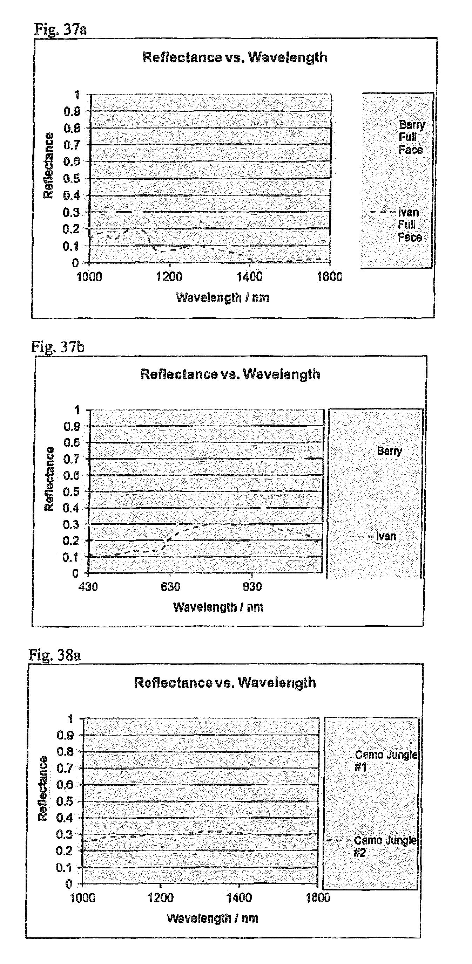

For facial skin, performance is best in the SWIR. As with the car panels, there are both similarities and differences in the spectral reflectances between the two subjects, see Figure 37. The differences may be partly due to the facial regions from which the reflectances were measured. These were not exactly equivalent, for the two people.

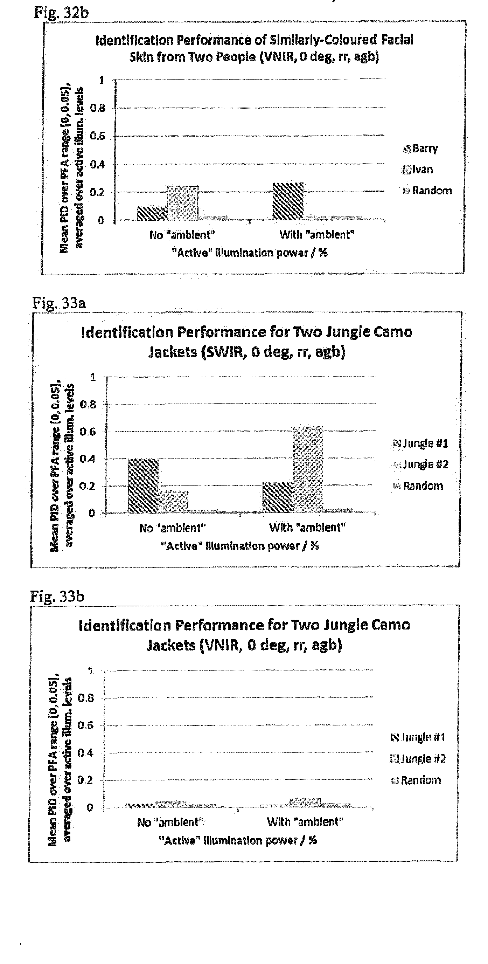

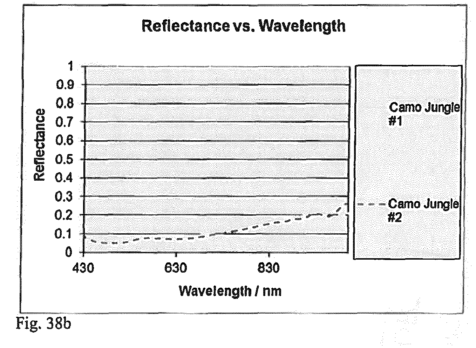

Finally, identification of the two jungle camouflage jackets is good in the SWIR; but not so in the VNIR, with PID results hovering around the noise floor value, see Figure 33. Figure 38 shows that the spectra from the two jackets are more similar to each other than they are for the car panels or skin. Even so, SWIR identification performance is very similar to that for the two red car body panels, see Figure 30. It is impressive how well the two jackets are distinguished, given that they appear to be made from the same type of fabric, with the same dyes, as borne out by Figure 38.

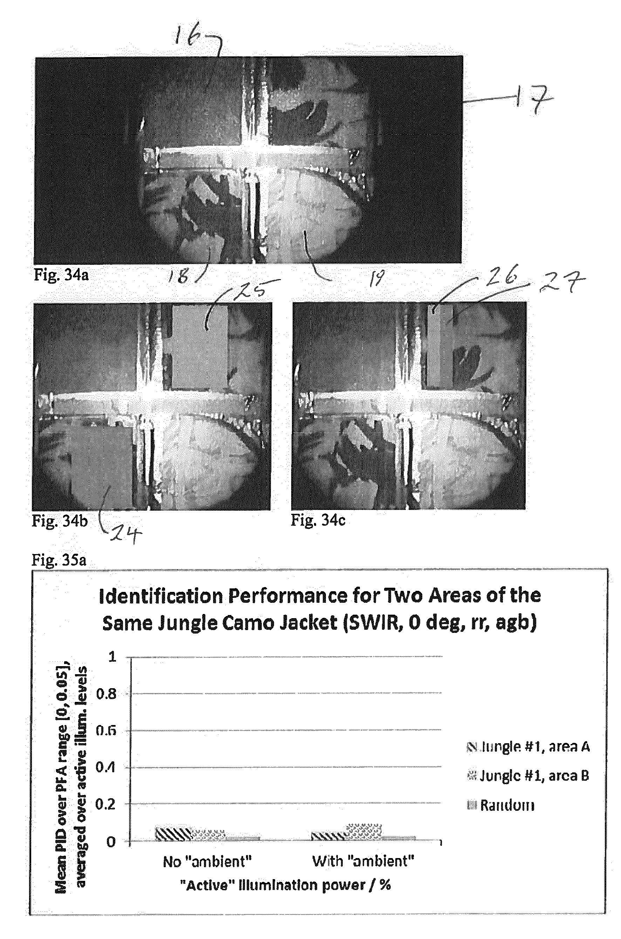

Figure 34a shows a four camouflage fabric target panel, SWIR false-colour RGB image, illuminated only by the "active" spotlight at 85% power. The top left and bottom right fabrics are, respectively, the German army jacket 16 and desert pattern helmet cover 19. The remaining two fabrics 17, 18 are from two separate jackets of the same design, with the same tropical jungle camouflage pattern. Figure 34b is as above, but overlaid with ground truth regions 24, 25 used to extract spectral tags from the two jungle camouflage jackets in this image, and to analyse identification performance in this and other images. Results from this analysis are shown in Figure 33. Figure 34c is similar to Figure 34b, but ground truth regions 26, 27 are on the same jungle camouflage jacket (results in Figure 35). As with the ground truth regions for the two separate jungle pattern jackets, these regions 26, 27 are chosen to have similar illumination levels, and a similar mix of camouflage dyes.

A control experiment was done in which spectral tags of two areas of the same jacket were measured, to see if two parts of the one jacket could also be distinguished. The results, shown in Figure 35, show that they cannot be distinguished, with the PID values only just exceeding the noise floor value. This suggests that, as well as being able to distinguish different camouflage jackets of the same type, spectral analysis can avoid mistakenly classifying two different measurements of the same jacket as being from different jackets. This is exactly what would be required from a commercial system to allow target hand-off and re-acquisition.

Thus, overall, the results suggest that a wide range of spectrally similar targets, encompassing fabric, painted car chassis, and human skin, can be reliably identified from their SWIR spectral characteristics. This has also been demonstrated in the VNIR for some but not all target types studied, suggesting that performance is less consistent for the VNIR.

The spectral differences evident in Figure 36 and Figure 37, even between apparently similar targets, suggest that identification performance using a few well-chosen spectral bands can match or exceed performance using all viable bands. However, finding a relatively small sub-set of bands which are generally applicable to distinguishing between all target types could require some effort.

Dimensionality reduction of spectral data has been looked at, with a brief investigation of the PCA method, and there are many more approaches to dimensionality reduction which may be used.

The effects on identification performance of factors such as relative newness, cleanliness, or dampness of the garments may need to be taken into account. These are especially challenging cases, which would be encountered if, for example, the locations of friendly team members all wearing the same type of uniform need to be tracked over a possibly long period of time, such that they need to be distinguished from each other as well as from non-team members.

A spectral image segmenter (such as the K-Means algorithm) may be used to divide each target material into a number of regions each of which is relatively spectrally distinct. Thus each target may have more than one spectral filter associated with it from a single measurement (in which the target is spatially resolved). This may improve detection performance for targets for which the illumination beam lights up more than one spectrally distinct surface. For example, at short range, this may prove effective for mottled camouflage materials, or heavily creased fabrics. At longer ranges, this may be useful when tagging individuals wearing spectrally distinct garments. Such multiple spectra could also be combined to give weighted average target spectra, more appropriate for longer range, less spatially resolved, identification.

For the spectral image segmenter, the K-means algorithm will be used as an example, only, of a suitable algorithm. The K-means algorithm divides a spectral image up by assigning each pixel to one of K spectral groups - that is, pixels with similar spectra. (K>=1, but obviously if K=1 then all the pixels are in the same group which is a trivial result. Thus, in practice, K>1.) A basic version of the algorithm does this in the following way:-

1. K pixels are chosen at random, their spectra providing "first guesses" for the average spectra of the K spectral groups.

2. All pixels are assigned to the group whose spectrum they match most closely (as measured by the Mahalanobis distance (MHD) - this requires measuring the covariance matrix C for all pixels being considered, i.e. those actively lit).

3. The spectral vectors of all the pixels in each group are averaged, by finding their centroid in the abstract "band space". This centroid, itself a spectral vector, then becomes the new estimate of that group's spectrum.

4. Return to step 2 and repeat with the new estimates of the K group spectra. Repeat a number I times. I should ideally be chosen so that a converged solution is reached - that is, on the Ith iteration, there is no change in the pixels assigned to each group compared to the (I-1)th iteration result.

The final result may be different for different choices of initial state. However, if the initial pixel spectra chosen are sufficiently different from each other, this helps K-means to settle on a predictable set of K groups, which are not much affected by exactly which pixel spectra are chosen for the initial state. This can be more reliably achieved by introducing an additional step between steps 1 and 2 above, in which MHD is calculated for each pair of initial spectra ( (K-1)+(K-2)+ ... + 2 + 1 pairs in total). If any of the MHD values fall below a threshold value, then some or all of the chosen pixels can be replaced with fresh ones chosen at random. The MHD values are then recalculated, and the process repeated, until an acceptable set of initial pixel spectra have been chosen; or perhaps until a maximum number of attempts have been made, suggesting that one of the rejected sets of initial pixels is the best we are likely to find with a reasonable amount of computing overhead.

This last technique could be used as the basis of a method to decide on the maximum useful value of K (i.e. estimate the number of distinct spectral groups in the image, which may allow the selection of K's value to be automated). For full automation, the MHD threshold would also have to be automatically calculated. A possible way of doing this would be to use the sensor noise in each spectral band to estimate a lower "noise" limit for the threshold (below which genuine spectral differences between pixels cannot be distinguished from noise effects). By using a statistical noise model (e.g. assuming the noise follows an independent Gaussian distribution in each band), we can then mathematically estimate the lower "noise" limit needed to give, e.g., 95% confidence that any greater MHD value is not caused by sensor system noise effects, and make this lower "noise" limit the MHD threshold.

The method and apparatus of the invention may additionally be used for detecting camouflaged or hidden objects. For this purpose, a spectral imager, rather than a point spectrometer would have to be used. This may involve looking for spectral anomalies which may or may not be there and which may not have been previously encountered, rather than searching for specific "spectral tags" which have been previously measured. Thus, for example, if a user wanted to check whether there was anything hidden in some vegetation a small distance away, he could illuminate the area, take a picture, and activate an anomaly detection algorithm which looks for anything that seems to stand out from the background.

A variant of the RX spectral anomaly detection algorithm may be used in the following way for a spectral tagging device used for anomaly detection:-

1. Calculate covariance matrix C of the spectral image (treating each spatial pixel as a sample, and each spectral band as a variable - so for N spectral bands, we get a NxN matrix C, estimated from all the image pixels' spectra).

    a. If actively illuminating the scene, we may exclude pixels that are not lit up by the illuminator.

    b. If relying on passive illumination, use all image pixels.

2. For each pixel used to calculate C, calculate a mean "background" spectrum.

    a. If using only actively lit pixels, estimate a single mean spectrum over all lit pixels, and use this as the background mean for each lit pixel.

    b. If using the entire image to estimate C (passive illumination), for each pixel, calculate the "local background mean" spectrum of all pixels in a square window of width W pixels, centred on the pixel in question. W must be an odd number to centre on the pixel. (In practice, this excludes all pixels in a border around the edge of the image which (W-1)/2 in width.)

3. For each pixel used to estimate C, calculate the MHD between the pixel spectrum vector x and the mean "background" spectrum vector u. MHD = square root $((x - u)^T C^{-1} (x - u))$ (Where " AT " means the transpose of the preceding vector or matrix, and $C^{-1}$ is the inverse of the matrix C.

Test the MHD of each pixel against a threshold value. If MHD > threshold, classify the pixel as anomalous (i.e. unlikely to be part of the "background", and so of interest for further investigation). So in this way, camouflaged objects whose spectra do not quite match their background should be detected as anomalies. The threshold can be automatically set, e.g. to give 95% confidence that anomalies are not background, if we assume a particular statistical distribution for the background. Otherwise, the threshold can be useradjusted.

As shadowing appears to have a significant detrimental effect on identification performance (due to reduced SNR), measurement would benefit from close co-location of the active light source and the imagers, especially for shorter distances between the device and target.

Using raw measured radiance spectra, without any attempt to calibrate, gives good and consistent performance, and is also the simplest method of measuring spectral tags. Calibrating the spectral image pixel-by-pixel (to remove extraneous effects, e.g., the exact illumination spectrum) gives significantly better performance, although this would be more complex.

Successful identification was demonstrated in both the SWIR and VNIR spectral regions.

Despite variability in performance between different materials, successful identification was demonstrated for the civilian and camouflage fabrics, the car body panels and human skin.

It was shown to be possible to distinguish between spectrally similar targets to a high degree of confidence (including between two camouflage jackets with the same pattern).

Identification performance tends to degrade when viewing angle or illumination power changes between measurements. However performance is maintained at a potentially useful level, despite using target materials with a variety of directional reflectance properties.

Lighting intensity can affect identification performance more than spectral variability of illumination. This is thought to be because performance is noiselimited under dim lighting. It also implies that identification performance is relatively robust to variability in source illumination spectra.

Good identification performance in the SWIR was demonstrated with spectral resolutions (spectral band widths) of approximately 3nm, 6nm and 12nm. Thus comparatively simple, cheap and portable spectral sensors may give adequate identification performance.

As well as potentially improving identification performance, spectral dimensionality reduction would also reduce the storage and data communication bandwidth overhead of spectral tagging data.

Performance does not seem to be limited by sensor noise characteristics, nor by illumination power.

Range-finding may be possible, up to ranges of as much as a few kilometres.

Snapshot spectral imagers employing Bayer-like spectral filters on the FPA may comprise workable sensors for an active tagging device.

**Claims**

1. A method of monitoring the movement and activity of targets comprising the steps of initially detecting electromagnetic (EM) radiation reflected by the target and recording spectral information relating thereto, detecting EM radiation reflected by a target at a later time and recording spectral information relating thereto, and comparing the spectral information relating to the initially detected and later detected targets whereby to establish whether the initially detected and later detected targets are the same.

2. A method according to claim 1 including the step of providing common access data storage means whereby to make available to interested parties the spectral information relating to the initially detected target and later detected target.

3. A method according to claim 1 or 2 including the step of actively illuminating the target with EM radiation.

4. A method according to claim 1, 2 or 3 comprising illuminating the target with pulsed laser radiation.

5. A method according to any of claims 1 to 4 including the step of illuminating the target with infra-red (IR) laser radiation.

6. A method according to any preceding claim including the step of illuminating the target with broadband IR laser radiation.

7. A method according to claim 4, 5 or 6, when dependent upon claim 4, including the step of detecting a range to the target.

8. A method according to any preceding claim, including the step of forming a spectral image of the reflected EM radiation.

9. A method according to any preceding claim, wherein the said comparison step comprises a matched filter processing step using a spectral angle mapper.

10. A method according to any preceding claim, including the step of determining whether an illuminated portion of the target includes more than one spectrally distinct region and, if so, carrying out the said steps of detection, recording and comparison for each spectrally distinct region.

11. A method according to claim 10, in which the step of determining whether an illuminated portion of the target includes more than one spectrally distinct region comprises the use of a spectral image segmenter algorithm.

12. A method according to claim 10 or 11, wherein spectral information from the more than one spectrally distinct region is combined to give weighted average target spectra.

13. Apparatus for monitoring the movement and activity of targets, the apparatus comprising means to illuminate the target with EM radiation, means to sense that portion of said illuminating EM radiation reflected from the target, means to store spectral information of the sensed reflected EM radiation and means to compare spectral information of sensed EM radiation from at least two separate illuminations.

14. A weapon including apparatus according to claim 13 mounted thereon.

15. A vehicle including apparatus according to claim 13 mounted thereon.

~2.25m range (0 deg)
~2.10m range (45 deg)

Fig. 1

Fig. 2

Fig. 3a

Fig.3b

Fig. 4a

Fig. 4b

Fig. 5a

Fig. 5b

Fig.6

a) Red — Yellow — Blue — Tan — 100%

0·06 (all)

b) 33%

0·09 (all)

c) 25%

0·14 (all)

d) 0·09 (Red, green, blue)
0·12 (Yellow)

e) 0·13 (Red), 0·14 (Green)
0·134 (Blue), 0·2 (Yellow)

Fig. 7

Fig. 8a

Fig. 8b

Fig. 8c

EP 2 711 730 A1

Fig. 9

Fig. 10b

Fig. 10c

18

Fig. 10a

Fig. 11a

Effect of Different Calibration Methods on PID for SWIR imagery, 0 deg aspect angle, all "good" bands.

Fig. 11b

Effect of Different Calibration Methods on PID for VNIR imagery, 0 deg aspect angle, all "good" bands.

Effect of Different Calibration Methods on PID for SWIR imagery, 0 deg aspect angle, all "good" bands.

Fig. 12a

Effect of Different Calibration Methods on PID for VNIR imagery, 0 deg aspect angle, all "good" bands.

Fig. 12b

Effect of Different Calibration Methods on PID for SWIR imagery, 0 deg aspect angle, all "good" bands.

Fig. 13a

Fig. 13b

Fig. 14a

Fig. 14b

## Effect on Performance of "Ambient" Illumination (SWIR, civs, 0 deg, rr, agb)

Fig. 15a (& 20a & 23a & 27a)

## Effect on Performance of "Ambient" Illumination (VNIR, civs, 0 deg, rr, agb)

Fig. 15b (&21a)

## Effect on Performance of "Ambient" Illumination (SWIR, cars, 0 deg, rr, agb)

Fig. 16a (& 20c & 28a)

Fig. 16b (& 21c)

Fig. 17a (& 25a)

Fig. 17b

Fig. 18a (& 20e & 26a & 30a)

Fig. 18b (& 21e)

Fig. 19a and b

Fig. 19c and d

Fig. 20b

Effect on Performance of "Ambient" Illumination (SWIR, civs, 45 deg, rr, agb)

Fig. 20d

**Effect on Performance of "Ambient" Illumination (SWIR, cars, 45 deg, rr, agb)**

Fig. 20f

**Effect on Performance of Illumination Level (SWIR, 3 camos, 45 deg, rr, agb)**

Fig. 22a

**Effect on Performance of "Ambient" Illumination (VNIR, civs, 45 deg, rr, agb)**

EP 2 711 730 A1

Fig. 22b

Effect on Performance of "Ambient" Illumination (VNIR, cars, 45 deg, rr, agb)

Fig. 22c

Effect on Performance of Illumination Level (VNIR, 3 camos, 45 deg, rr, agb)

Fig. 23b

Effect on Performance of "Ambient" Illumination (SWIR, civs, 0 deg, rr, agb, bx2)

Fig. 23c

Effect on Performance of "Ambient" Illumination (SWIR, civs, 0 deg, rr, agb, bx4)

Fig. 24b

Effect on Performance of "Ambient" Illumination (SWIR, cars, 0 deg, rr, agb, bx2)

Fig. 24c

Effect on Performance of "Ambient" Illumination (SWIR, cars, 0 deg, rr, agb, bx4)

Fig. 25b

Effect on Performance of "Ambient" Illumination (SWIR, people, 0 deg, rr, max. spot size, agb, bx2)

Fig. 25c

Effect on Performance of "Ambient" Illumination (SWIR, people, 0 deg, rr, max. spot size, agb, bx4)

Fig. 26b

Effect on Performance of Illumination Level (SWIR, 3 camos, 0 deg, rr, agb, bx2)

EP 2 711 730 A1

Fig. 26c

**Effect on Performance of Illumination Level
(SWIR, 3 camos, 0 deg, rr, agb, bx4)**

Fig. 27b

**Effect on Performance of "Ambient"
Illumination (SWIR, clvs, 0 deg, rr, agb, pca)**

Fig. 27c

**Effect on Performance of "Ambient"
Illumination (SWIR, clvs, 0 deg, rr, agb, bx4, pca)**

30

Fig. 28b

Effect on Performance of "Ambient" Illumination (SWIR, cars, 0 deg, rr, agb, pca)

Fig. 28c

Effect on Performance of "Ambient" Illumination (SWIR, cars, 0 deg, rr, agb, bx4, pca)

Fig. 29b

Effect on Performance of "Ambient" Illumination (SWIR, people, 0 deg, rr, max. spot size, agb, pca)

Fig. 29c

**Effect on Performance of "Ambient" Illumination (SWIR, people, 0 deg, rr, max. spot size, agb, bx4, pca)**

Fig. 30b

**Effect on Performance of Illumination Level (SWIR, camos, 0 deg, rr, agb, pca)**

Fig. 30c

**Effect on Performance of Illumination Level (SWIR, camos, 0 deg, rr, agb, bx4, pca)**

EP 2 711 730 A1

Fig. 31a

Identification Performance of Similarly-Coloured Red Car Body Panels (SWIR, 0 deg, rr, agb)

Fig. 31b

Identification Performance of Similarly-Coloured Red Car Body Panels (VNIR, 0 deg, rr, agb)

Fig. 32a

Identification Performance of Similarly-Coloured Facial Skin from Two People (SWIR, 0 deg, rr, agb)

33

Fig. 32b

**Identification Performance of Similarly-Coloured Facial Skin from Two People (VNIR, 0 deg, rr, agb)**

Fig. 33a

**Identification Performance for Two Jungle Camo Jackets (SWIR, 0 deg, rr, agb)**

Fig. 33b

**Identification Performance for Two Jungle Camo Jackets (VNIR, 0 deg, rr, agb)**

Fig. 34a

Fig. 34b

Fig. 34c

Fig. 35a

**Identification Performance for Two Areas of the Same Jungle Camo Jacket (SWIR, 0 deg, rr, agb)**

Jungle #1, area A

Jungle #1, area B

Random

Fig. 35b

## Identification Performance for Two Areas of the Same Jungle Camo Jacket (VNIR, 0 deg, rr, agb)

Mean PID over PFA range [0, 0.05], averaged over active illum. levels

- Jungle #1, area A
- Jungle #1, area B
- Random

No "ambient"    With "ambient"

"Active" illumination power / %

Fig. 36a

## Reflectance vs. Wavelength

Car Red#1

- - - Car Red#2

Wavelength / nm

Fig. 36b

## Reflectance vs. Wavelength

Car red#1

- - - Car red#2

Wavelength / nm

EP 2 711 730 A1

Fig. 37a

**Reflectance vs. Wavelength**

Barry Full Face

Ivan Full Face

Fig. 37b

**Reflectance vs. Wavelength**

Barry

Ivan

Fig. 38a

**Reflectance vs. Wavelength**

Camo Jungle #1

Camo Jungle #2

Fig. 38b

Europäisches
Patentamt

European
Patent Office

Office européen
des brevets

# EUROPEAN SEARCH REPORT

Application Number

EP 13 25 0064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BERNADETTE JOHNSON ET AL: "<title>Compact active hyperspectral imaging system for the detection of concealed targets</title>", PROCEEDINGS OF SPIE, vol. 3710, 2 August 1999 (1999-08-02), pages 144-153, XP055090117, ISSN: 0277-786X, DOI: 10.1117/12.357002 * Section 2 - 3; page 145 - page 152 * | 1-15 | INV. G01S7/48 G01S7/41 G01S17/89 G01S17/06 G01S17/02 |
| X | DIMITRIS MANOLAKIS ET AL: "Detection Algorithms for Hyperspectral Imaging Applications", IEEE SIGNAL PROCESSING MAGAZINE, IEEE SERVICE CENTER, PISCATAWAY, NJ, US, vol. 19, no. 1, 1 January 2002 (2002-01-01), pages 29-43, XP011093744, ISSN: 1053-5888 * page 35, left-hand column - page 36, left-hand column * | 1-15 | |
| X | US 7 194 111 B1 (SCHAUM ALAN P [US] ET AL) 20 March 2007 (2007-03-20) * column 5, line 1 - column 11, line 8; figure 2 * | 1,2,8, 10-15 | TECHNICAL FIELDS SEARCHED (IPC) G01S |
| X | US 6 008 492 A (SLATER MARK [US] ET AL) 28 December 1999 (1999-12-28) * column 11, line 60 - column 17, line 8; figures 1,5 * | 1,2,8-15 | |

The present search report has been drawn up for all claims

| Place of search | Date of completion of the search | Examiner |
|---|---|---|
| Munich | 7 January 2014 | Fanjul Caudevilla, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 25 0064

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2014

| Patent document cited in search report | | Publication date | Patent family member(s) | Publication date |
|---|---|---|---|---|
| US 7194111 | B1 | 20-03-2007 | NONE | |
| US 6008492 | A | 28-12-1999 | NONE | |

EPO FORM P0459